# EUROPÄISCHE PATENTANMELDUNG

(11) **EP 1 225 127 A1**
(43) Veröffentlichungstag der Anmeldung: **24.07.2002**
(21) Anmeldenummer: 02000501.3
(22) Anmeldetag: 09.01.2002
(51) Int. Cl.: B64G 1/22, B64G 1/40, B64G 1/64, F17C 13/08

(54) **Mechanische Stützstruktur mit alternativen Zuständen hoher Festigkeit oder geringer thermischer leitfähigkeit sowie Verbindungsstrebe**

(30) Priorität: 19.01.2001 DE 10102330
(71) Anmelder: Astrium GmbH, 81663 München (DE)
(72) Erfinder: Roth, Martin, 82024 Taufkirchen (DE); Sperber, Franz, 83059 Kolbermoor (DE); Wagner, Adalbert, 83739 Radthal-Wörnsmühl (DE)
(74) Vertreter: Ulrich, Thomas

(57) **Zusammenfassung**

Beschrieben wird eine mechanische Stützstruktur (12) mit mindestens einem Formteil (7) aus einer Formgedächtnislegierung, das in einem ersten Betriebszustand der Stützstruktur (12) zu einer Erhöhung der Festigkeit der Stützstruktur (12) und in einem zweiten Betriebszustand zu einer Verringerung der thermischen Leitfähigkeit der Stützstruktur (12) führt. Eine Strebenstruktur (4) ist dabei von einer Rohrstruktur (3) umgeben, welche im Vergleich zur Strebenstruktur (4) eine höhere mechanische Festigkeit aufweist, und die Strebenstruktur (4) ist an einem ersten Ende (14) mit der Rohrstruktur (3) fest verbunden. Die Strebenstruktur (4) ist zudem mit einer Halterung (5) verbunden und die Rohrstruktur (4) ist an einem zweiten Ende (13) der Strebenstruktur (4) mittels dem mindestens einen Formteil (7) lösbar mit der Halterung (5) und der Strebenstruktur (4) verbunden.

## Beschreibung

Die vorliegende Erfindung betrifft eine mechanische Stützstruktur mit alternativen Zuständen hoher Festigkeit oder geringer thermischer Leitfähigkeit sowie eine Verbindungsstrebe, die eine solche Stützstruktur aufweist.

Aus dem Stand der Technik sind bereits solche Arten von Stützstrukturen bekannt. So zeigt US 3,814,361 eine Stützstruktur aus ineinander geschobenen Rohrelementen, wobei äußere, aneinander anliegende und eine höhere mechanische Festigkeit garantierende Rohrelemente als eine zweite Strebenstruktur durch Abkühlung getrennt werden können und dann nur noch ein inneres Rohrelement als eine erste Strebenstruktur die mechanische Last trägt, wobei die erste Strebenstruktur mit der zweiten Strebenstruktur verbunden bleibt und aufgrund einer geringen Kontraktfläche zu einem der Rohrelemente eine geringe thermische Leitfähigkeit garantiert. Allerdings ist die zweite Strebenstruktur gleitend in der ersten gelagert, es kann also nur eine sehr eingeschränkte mechanische Festigkeit garantiert werden und z.B. die Gefahr eines Verkantens nicht ausgeschlossen werden.

Eine andere Stützstruktur zeigt EP 0 584 697. Dort werden zur Trennung eines Stützpfades mit hoher mechanischer Festigkeit Formteile aus einer Formgedächtnislegierung verwendet. Dort wird entweder durch Ausdehnung eines Bolzens ein durch Ösen gebildeter Stützpfad unterbrochen und teilweise durch eine Halterung mittels einer Feder ersetzt oder es wird ein Spreizrahmen als zweite Strebenstruktur, der stets mit einem Objekt als Halterung verbunden bleibt, geöffnet und so von einer ersten Strebenstruktur in Form einer mechanisch weniger stabilen Strebe getrennt, an deren einem Ende der Spreizrahmen angreift. Die zweite Strebenstruktur ist dabei in einer Ebene mit der ersten Strebenstruktur neben dieser angeordnet, wodurch ebenfalls nur eine eingeschränkte Stabilität gewährleistet wird.

Aufgabe der vorliegenden Erfindung ist es daher, eine mechanische Stützstruktur bereitzustellen, die eine verbesserte Stabilität bei weiterhin beibehaltener Verringerung der thermischen Leitfähigkeit in einem der Betriebszustände aufweist. Außerdem soll die Stützstruktur möglichst einfach in bestehende Stützstrukturen integrierbar sein.

Diese Aufgabe wird gelöst durch die Merkmale des vorliegenden Patentanspruchs 1.

Die erfindungsgemäße mechanische Stützstruktur weist mindestens ein Formteil aus einer Formgedächtnislegierung auf, das in einem ersten Betriebszustand der Stützstruktur zu einer Erhöhung der Festigkeit der Stützstruktur und in einem zweiten Betriebszustand zu einer Verringerung der thermischen Leitfähigkeit der Stützstruktur führt. Eine Strebenstruktur ist von einer Rohrstruktur umgeben, welche im Vergleich zur ersten Strebenstruktur eine höhere mechanische Festigkeit aufweist, wobei die die Strebenstruktur umgebende Rohrstruktur bereits die Stabilität der Anordnung erhöht. Außerdem ist die Strebenstruktur an einem ersten Ende mit der Rohrstruktur fest verbunden, so dass im wesentlichen keine Verschiebung der beiden Strukturen gegeneinander erfolgen kann, was wiederum die Stabilität erhöht und die bewegliche Masse der Anordnung verringert. Die Strebenstruktur ist außerdem mit einer Halterung verbunden und die Rohrstruktur ist an einem zweiten Ende der Strebenstruktur mittels dem mindestens einen Formteil lösbar mit der Halterung und der Strebenstruktur verbunden. Einerseits erfährt dadurch die Strebenstruktur hier eine weitere Abstützung, andererseits ermöglicht die Tatsache, dass die lösbare Verbindung zwischen Rohrstruktur einerseits und Strebenstruktur und Halterung andererseits gerade am Ende der Strebenstruktur vorgesehen wird, dass das Lösen der Verbindung auf einen kleinstmöglichen räumlichen Bereich beschränkt werden kann, so dass der übrige Aufbau der Stützstruktur in beiden Zuständen der Struktur weitgehend unverändert bleibt.

Durch die Trennung der Rohrstruktur von der Halterung und von dem zweiten Ende der Strebenstruktur kann die Wärmeleitfähigkeit der gesamten Stützstruktur verringert werden, gesteuert durch das mindestens eine Formteil, das speziell zu diesem Zweck angepaßt und optimiert werden kann.

In einer Weiterbildung der Erfindung kann die Rohrstruktur durch eine formschlüssige Klemmverbindung lösbar mit der Halterung und der Strebenstruktur verbunden sein. Dies stellt eine besonders einfache Form einer lösbaren Verbindung dar. Es kann hierzu insbesondere an dem zweiten Ende der Strebenstruktur mindestens ein in Längsrichtung der Rohrstruktur verschieblicher Klemmkörper angeordnet sein, der mit dem mindestens einen Formteil verbunden ist und der in einem ersten Zustand der Formgedächtnislegierung des Formteils mit der Klemmverbindung im Sinne eines Lösens der Klemmverbindung und in einem zweiten Zustand der Formgedächtnislegierung des Formteils im Sinne eines formschlüssigen Verriegelns der Klemmverbindung zusammenwirkt. Somit wird, gesteuert durch die Zustände des Formteils, auf einfache Weise ein Lösen oder Verriegeln der Klemmverbindung erreicht.

Der Klemmkörper kann beispielsweise als topfförmige Hülse ausgebildet sein. Diese muss dann in der Regel so angeordnet oder ausgestaltet sein, dass sie eine feste Verbindung zwischen Strebenstruktur und Halterung ermöglicht. So kann beispielsweise die Strebentruktur einen oder mehrere Fortsätze aufweisen, die durch Öffnungen in der Hülse hindurchgreifen und die unlösbar mit der Halterung verbunden sind. Die Klemmverbindung wiederum kann beispielsweise durch mindestens einen flexiblen Fortsatz der Halterung gebildet werden, die in mindestens eine Ausnehmung der Rohrstruktur formschlüssig eingreift. Flexibel bedeutet dabei, dass der mindestens eine Forsatz der Halterung ausreichend beweglich sein muss, um ein formschlüssiges Lösen und Verriegeln der Klemmverbindung zu erlauben.

Es kann weiterhin die Strebenstruktur zumindest abschnittsweise als Hohlstrebe ausgebildet sein und mindestens ein Formteil zumindest teilweise umschließen. Damit wird auf einfache Weise erreicht, dass die Strebenstruktur das Formteil innerhalb der Stützstruktur stabilisiert.

Für das mindestens eine Formteil kann nun jede geeignete Ausbildung vorgesehen werden, die bei Überschreitung oder Unterschreitung einer bestimmten Schwelltemperatur den Formgedächtniseffekt des Formteils auslöst und dadurch ein Lösen und Verriegeln der lösbaren Verbindung zu dem Rohrstruktur ermöglicht. Insbesondere können die Formteile derart ausgebildet sein, dass bei Überschreitung oder Unterschreitung einer Schwelltemperatur eine Längsausdehnung des Formteils erfolgt und diese ein Lösen oder Verriegeln der Verbindung bewirkt.

Die vorstehend beschriebenen Arten und Ausführungsformen von Stützstrukturen können in jeder geeigneten Anwendung verwendet werden. Durch die Vorsehung eines mechanisch festen Betriebszustandes und eines termisch gering leitenden Betriebszustandes sind Anwendungen überall dort sinnvoll, wo in einer ersten Phase eines Betriebes einer Anordnung eine hohe mechanische Festigkeit zu garantieren ist, z.B. während einer Transportphase, und in einer zweiten Phase eine weitgehende thermische Isolation erreicht werden soll, z.B. während einer Kühlungs- oder Heizphase. Somit kann die vorliegende Erfindung insbesondere Anwendung finden in einer Verbindungsstrebe zur Verbindung von Bauteilen mit unterschiedlicher Temperatur.

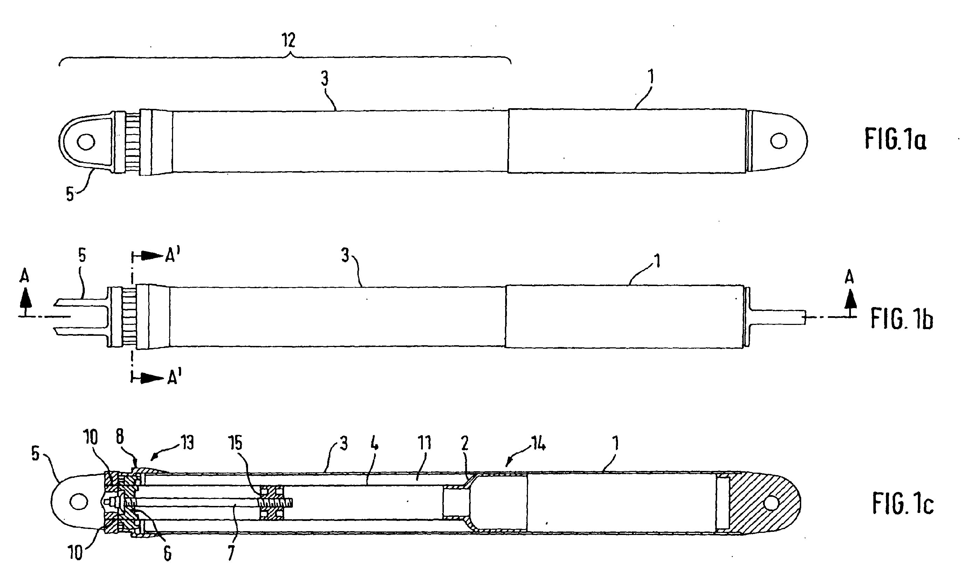

Ein spezielles Ausführungsbeispiel wird nachfolgend anhand der Fig. 1 bis 2 beschrieben. Es zeigen
- Fig. 1 a), b): Seitenansicht einer erfindungsgemäße Stützstruktur
- Fig. 1 c): Längsschnitt A-A durch die Struktur nach Fig. 1 b)
- Fig. 2: Querschnitt A'-A' durch die Struktur nach Fig. 1 b)
- Fig. 3: Ausschnittsvergrößerung eines Längsschnitts durch ein Ende der Stützstruktur
- Fig. 4: Querschnitt durch eine Stützstruktur mit anschließender Strebe
- Fig. 5: perspektivische Seitenansicht einer Stützstruktur mit Strebe

Die in der Fig. 1 a) bis c) dargestellte Stützstruktur kann auf einfache Weise in das Auge einer Strebe 1 oder in eine Ausnehmung eines sonstigen Halteelements eingesetzt werden, indem am einen Ende 14 der als Hohlstrebe ausgebildeten Strebenstruktur 4 ein Verbindungsstück 2 vorgesehen wird, das in ein solches Auge oder eine solche Ausnehmung eingesetzt wird. Die hier dargestellte Stützstruktur 12 ist damit sehr universell einsetzbar. Im speziellen Fall nach Fig. 1 a) bis c) bildet idealerweise die Rohrstrukur 3 durch eine passende Dimensionierung eine Verlängerung einer als Rohr ausgebildeten Strebe 1, so dass die gesamte Stützstruktur 12 effektiv die Strebe 1 lediglich verlängert, sonst jedoch keine Beeinträchtigung der Struktur der Strebe 1 erfolgt. Dies ist auch in Fig. 5 nochmals deutlich dargestellt.

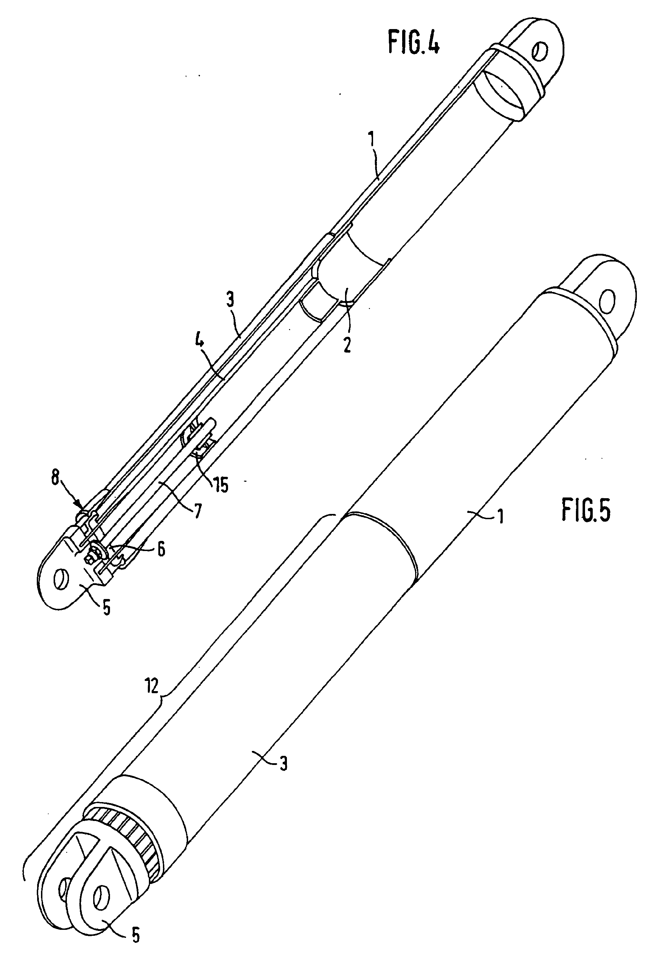

Die Stützstruktur 12 wird folglich gebildet durch eine Rohrstruktur 3, die eine Strebenstruktur 4 konzentrisch umgibt und die beispielsweise durch eine thermisch isolierende Schicht oder einen Zwischenraum 11, welche zu einer weiteren Stabilisierung der Struktur beitragen kann, voneinander getrennt sein können. Auf eine isolierende Schicht kann bei geeigneter Ausbildung des Verbindungsstückes 2 sowie des übrigen Mechanismus der Stützstruktur 12 auch verzichtet werden. An einem ersten Ende 14 sind somit die Rohrstruktur 3 und die Strebenstruktur 4 zumindest mittels des Verbindungsstückes 2 fest miteinander verbunden und auch mit der anschließenden Strebe 1 verbunden. Fig. 4 zeigt nochmals in perspektivischer Darstellung einen Längsschnitt durch eine solche Stützstruktur.

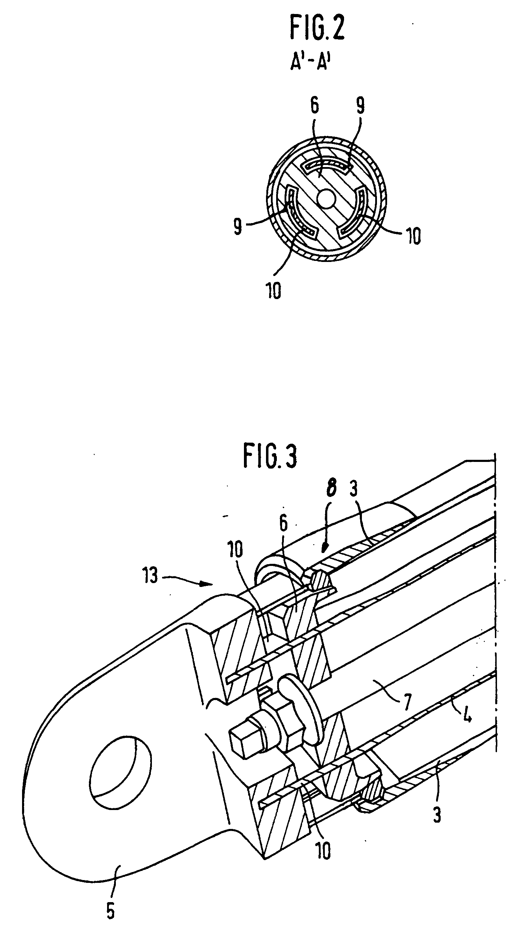

Die Funktion der Stützstruktur ist insbesondere aus der Detailansicht des Endes 13 in Fig. 3 erkennbar. Die Rohrstruktur 3 umschließt ein Formteil 7 in Form eines Bolzens oder einer Schraube aus einer Formgedächtnislegierung, das in der Rohrstruktur 4 durch eine geeignete Lagerung 15 gelagert ist und das bei Überschreiten einer Schwelltemperatur Tₛ, beispielsweise Tₛ = 0 ° C, eine Umwandlung von einem ersten Zustand (Martensit) in einen zweiten Zustand (Austenit) erfahren, verbunden mit einer Änderung der Form, im vorliegenden Beispiel mit einer Längenänderung. Grundsätzlich können auch mehrere geeignete Formteile vorgesehen werden. Hier kommt es zu einer Verkürzung des Formteils 7 in Längsrichtung der Strebenstruktur 4 bzw. der Rohrstruktur 3. Dadurch wird eine mit dem Formteil verbundene, hier topfförmige Hülse 6 in Längsrichtung der Rohrstruktur 3 bzw. der Strebenstruktur 4 verschoben. Die Hülse 6 betätigt eine Klemmverbindung 8 zwischen einer Halterung 5, welche fest mit der Strebenstruktur 4 verbunden ist, und der Rohrstruktur 3. Dazu weist die Hülse 6 einen konischen Auslauf auf, der mit Fortsätzen 8 der Halterung 5 zusammenwirkt, welche beispielsweise als Federlamellen ausgebildet sind. Diese werden durch die Hülse 6 bei einer Längsverschiebung der Hülse 6 auf das erste Ende 14 zu in entsprechende Ausnehmungen der Rohrstruktur 3 gedrückt und so eine formschlüssige Verbindung als Klemmverbindung zwischen der Rohrstruktur 3 einerseits und der Halterung 5 und der mit ihr verbundenen Strebenstruktur 4 andererseits im Bereich des zweiten Endes 13 hergestellt. Dadurch wird ein Lastpfad von der Halterung 5 über die Rohrstruktur 3 und die Strebenstruktur 4 zu der Strebe 1 hergestellt. Dieser besitzt eine mechanisch hohe Festigkeit.

Wird die Schwelltemperatur Tₛ unterschritten, so erfolgt die umgehrte Umwandlung der Formgedächtnislegierung, so dass sich im vorliegenden Fall das Formteil 7 ausdehnt. Bei einer Verschiebung der Hülse 6 von dem ersten Ende 14 weg wird die Klemmverbindung gelöst und damit die Rohrstruktur 3 von der zweiten Strebenstruktur 4 getrennt, der Lastpfad führt in diesem Fall nur über die Halterung 5 und die Strebenstruktur 4 zur Strebe 1. Damit ist auch die thermische Leitung von der Halterung 5 über die Rohrstruktur 3 zu der Strebe 1 unterbunden, so dass eine deutlich verringerte thermische Leitfähigkeit gegeben ist.

Die feste Verbindung zwischen der Strebenstruktur 4 und der Halterung 5 kann auf jede geeignete Weise hergestellt werden. Wie in Fig. 1 und 3 und zur weiteren Verdeutlichung im Querschnitt in Fig. 2 dargestellt, kann beispielsweise die Strebenstruktur 4 Fortsätze 10 aufweisen, die durch axial geschlitzte Öffnungen 9 der Hülse 6 hindurchgeführt sind, wobei die Fortsätze 10 nicht mit der Hülse 6 verbunden sind, so dass die Hülse 6 längsverschieblich entlang der Fortsätze 10 beweglich ist. Die Fortsätze 10 können dann fest mit der Halterung 5 verbunden werden, beispielsweise durch verkleben, verlöten, verschweissen, verschrauben oder ähnliches.

Die Erfindung kann nun überall dort Einsatz finden, wo auf der Seite der Halterung 5 eine andere Temperatur vorliegt als auf der Seite des Endes 14 der Stützstruktur 12, das mit einer weiteren Strebe 1, Halterung oder einem sonstigen Bauteil verbunden sein kann. Die Erfindung kann z.B. als Transport- und Betriebshalterung von Kühl- oder Heizeinrichtungen, Kühltanks, Motoren oder ähnlichem dienen. Beispielsweise kann bei einer Anwendung in der Raumfahrt während der Start- und Landephase eines Raumfahrzeuges durch die Verriegelung der lösbaren Verbindung der Stützstruktur 12 eine hohe mechanische Festigkeit für die Lagerung beispielsweise kryogener Einrichtungen auf einer Seite der Stützstruktur 12 garantiert werden, da die hohen Startlasten sowohl durch die Rohrstruktur 3 als auch durch die Strebenstruktur 4 getragen werden. In einer Arbeitsphase im Weltraum kann dann die Verbindung gelöst werden, wodurch nun eine weitgehende thermische Isolation der kryogenen Einrichtung von den Einrichtungen auf der anderen Seite der erfindungsgemäßen Stützstruktur 12 erfolgen kann.

## Patentansprüche

1. Mechanische Stützstruktur (12) mit mindestens einem Formteil (7) aus einer Formgedächtnislegierung, das in einem ersten Betriebszustand der Stützstruktur (12) zu einer Erhöhung der Festigkeit der Stützstruktur (12) und in einem zweiten Betriebszustand zu einer Verringerung der thermischen Leitfähigkeit der Stützstruktur (12) führt, wobei eine Strebenstruktur (4) von einer Rohrstruktur (3) umgeben ist, welche im Vergleich zur Strebenstruktur (3) eine höhere mechanische Festigkeit aufweist, und die Strebenstruktur (4) an einem ersten Ende (14) mit der Rohrstruktur (3) fest verbunden ist, die Strebenstruktur (4) mit einer Halterung (5) verbunden ist und die Rohrstruktur (3) an einem zweiten Ende (13) der Strebenstruktur (4) mittels dem mindestens einen Formteil (7) lösbar mit der Halterung (5) und der Strebenstruktur (4) verbunden ist.

2. Stützstruktur nach Anspruch 1, wobei die Rohrstruktur (3) durch eine formschlüssige Klemmverbindung (8) lösbar mit der Halterung (5) und der Strebenstruktur (4) verbunden ist.

3. Stützstruktur nach Anspruch 2, an dem zweiten Ende (13) der Strebenstruktur (4) mindestens ein in Längsrichtung der Rohrstruktur (3) verschieblicher Klemmkörper (6) angeordnet ist, der mit dem mindestens einen Formteil (5) verbunden ist und der in einem ersten Zustand der Formgedächtnislegierung des Formteils (7) mit der Klemmverbindung (8) Sinne eines Lösens der Klemmverbindung und in einem zweiten Zustand der Formgedächtnislegierung des Formteils (7) im Sinne eines formschlüssigen Verriegelns der Klemmverbindung zusammenwirkt.

4. Stützstruktur nach Anspruch 3, wobei der Klemmkörper (6) als topfförmige Hülse ausgebildet ist und die Strebenstruktur (4) Fortsätze (10) aufweist, die durch Öffnungen (9) in der Hülse (6) hindurchgreifen und die unlösbar mit der Halterung (5) verbunden sind.

5. Stützstruktur nach einem der Ansprüche 2 bis 4, wobei die Klemmverbindung (8) durch mindestens einen flexiblen Fortsatz der Halterung (5) gebildet wird, der in mindestens eine Ausnehmung der Rohrstruktur (3) formschlüssig eingreift.

6. Stützstruktur nach einem der Ansprüche 1 bis 5, wobei die Strebenstruktur (4) zumindest abschnittsweise als Hohlstrebe ausgebildet ist und das mindestens eine Formteil (7) zumindest teilweise umschließt.

7. Verbindungsstrebe zur Verbindung von Bauteilen mit unterschiedlicher Temperatur, aufweisend eine Stützstruktur nach einem der Ansprüche 1 bis 6 .
